# EUROPEAN PATENT SPECIFICATION

(11) **EP 1 483 467 B1**
(45) Date of publication and mention of the grant of the patent: **24.11.2010**
(21) Application number: 03743791.0
(22) Date of filing: 13.03.2003
(51) Int. Cl.: E04G 21/28

(54) **structural element**
Bauteil
ELEMENT DE STRUCTURE

(30) Priority: 13.03.2002 DK 200200384
(43) Date of publication of application: 08.12.2004
(73) Proprietor: BORK & BLOM ApS, 2640 Hedehusene (DK)
(72) Inventor: BLOM, Mads, Reerslev, 2640 Hedehusene (DK); BORK, Claus, 3460 Birkerod (DK)
(74) Representative: Holme, Edvard
(86) International application number: PCT/DK2003/000157
(87) International publication number: WO 2003/076741

(56) References cited:
- WO-A1-01/48336
- DE-A1- 2 751 219
- DE-A1- 3 610 908
- SE-C2- 511 245
- US-A- 5 143 138

## Description

The invention relates to a thermoelement comprising a frame with a flexible sheet on either side for covering the opening defined by the frame, at least one at least partly circumferential, U-shaped locking groove having a bottom and two opposite sides and arranged to receive a peripheral area of the sheets, and a locking list for each locking groove for fastening the sheet in the at least one locking groove, and also a method for mounting the sheets on the frame.

Thermoelements are among other things used for temporarily closing wall openings in buildings being built or renovated. The thermoelements serve for satisfying the demands made today on the environment in a building at such a phase.

From the publication WO 01/48336 Al is known a rectangular thermoelement having an angular window frame for mounting the thermoelement in a wall opening and a clamping frame for fixing two sheets in the window frame at a mutual distance.

However, this known arrangement is relatively expensive to produce. Furthermore, it is specially adapted for mounting in wall opening. It can therefore not be used universally.

From the U.S. Patent No. 4,333,284 is known a rectangular window frame for mounting in an opening. In the frame two circumferential locking grooves are made in which a sheet is clamped by means of locking lists. In one of the locking grooves are used locking lists made in a T-profile with a body with barbs that can engage barbs on the inside of the locking groove. The T-shaped locking lists are arranged to be inserted easily in and taken just as easily out of the locking groove. This arrangement causes a loose connection to be formed that has a tendency of getting leaky and therefore cannot be used as a thermoelement. The body of the locking list furthermore has a relatively thin and at the same time round pressure face for pressing on the sheet to be clamped in the locking groove which at the same time has a wide entry opening. This causes the sheet to be spanning a large section freely at first and therefore cannot be controlled during fastening at the result of the sheet not for certain being clamped tightly.

Another U.S. patent document US 5,732,760 describes a window element in which a sheet is fastened on either side of a frame by means of a number of compressible lists attached in a circumferential groove in the frame. Compressible lists of e.g. polymer age and creep when they in this case are acted upon by tensions permanently. A joining by means of such lists will therefore not be able to hold in the long run. Furthermore, this window element suffers the same disadvantage as the window element described above, as the sheet will span a large section freely at first and therefore cannot be controlled and fastened tightly in this case either. Another disadvantage is that the sheet cannot be tightened in the corners and that the window element therefore is not tight here and therefore quite unsuitable as thermoelement.

In one aspect according to the invention a thermoelement of the kind mentioned in the opening paragraph is provided that has a simple, inexpensive structure.

In a second aspect according to the invention a thermoelement of the kind mentioned in the opening paragraph is provided that is easy to manufacture.

In a third aspect according to the invention a thermoelement of the kind mentioned in the opening paragraph is provided that can be used universally.

In a fourth aspect according to the invention a thermoelement of the kind mentioned in the opening paragraph is provided for reliably and permanently fastening a sheet.

In a fifth aspect according to the invention a thermoelement of the kind mentioned in the opening paragraph is provided for easily and reliably mounting a sheet tightly.

In a sixth aspect according to the invention a method of making a thermoelement of the kind mentioned in the opening paragraph is provided.

According to the invention each locking list is U-shaped with a body that in mounted state faces the bottom of the respective locking groove and two opposite legs facing each their side of the sides of the locking groove at the same time. Thereby, the sheets can be mounted in the frame quickly and easily in a permanently firm joining.

The locking groove and the locking list can advantageously be designed in such a way that the distance between a side in the locking groove and the opposite leg on an associate locking list corresponds to or is slightly smaller than the thickness of a fastened sheet. This means that the peripheral areas of the sheets are effectively fastened between the locking grooves and the locking lists.

If the sides of the locking grooves and the legs of the locking lists furthermore are designed with longitudinal ribs, the safety of the joining is increased further.

The body of the U-shaped locking lists and two opposite legs can advantageously be designed in such a way that they pass into each other with no or small curvature, whereby it is obtained that the sheet at no time during fastening will span the locking groove freely and therefore can be mounted tightly.

In an advantageous embodiment the frame can be rectangular and made up of four mainly U-shaped frame bars each having a body and two legs, a locking groove being made in each of these legs for receiving a peripheral area of a sheet, and each locking groove having a locking list for fastening said peripheral area in the locking groove.

This structure is simple and inexpensive to manufacture and can be used universally.

The invention will be explained in greater details below, describing only exemplary embodiments and giving further advantageous characteristics and technical functions with reference to the drawing, in which
Fig. 1 is a plane view of a thermoelement according to the invention with a frame and two sheets,
Fig. 2 is a sectional view taken along the line II - II of fig. 1,
Fig. 3 is on a larger scale a fractional sectional view of the sheets during mounting on the frame, and
Fig. 4 is on a larger scale a fractional view of a corner of the thermoelement in fig. 1.

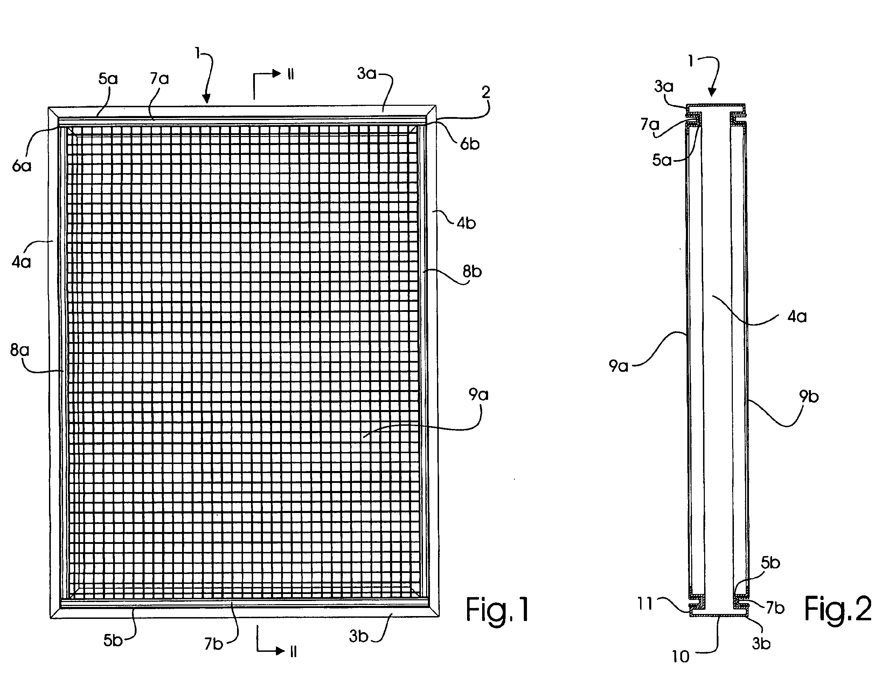

Figs. 1 and 2 show a thermoelement 1 according to the invention in form of a rectangular frame 2 made up of two pairs of opposite frame bars, 3a,b and 4a,b respectively.

Two pairs of longitudinal locking grooves, 5a,b and 6a,b respectively, are made in each frame bar 3a,b and 4a,b. Two pairs of locking lists, 7a,b and 8a,b respectively, are part of the locking grooves. On either side of the frame 1 a sheet 9a,b is furthermore mounted that e.g. can be of the type consisting of a fibre glass reinforced plastic sheeting. The sheet 9a,b is fastened on the frame 2 by means of the locking grooves 5a,b and 6a,b and the locking lists 7a,b and 8a,b in the way described in detail below.

The frame bats 3a,b and 4a,b and the locking lists 7a,b and 8a,b can be made in any other suitable manner within the scope of the invention. For example, they can be made of edge-folded plastic or metal plates. In a preferred embodiment the bars however are made of extruded aluminium profiles cut to desired lengths.

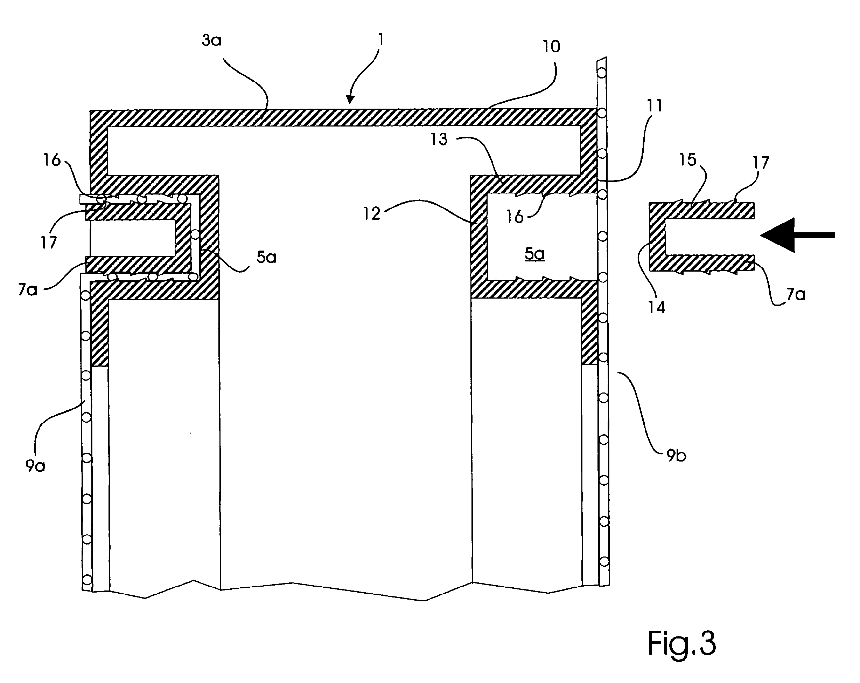

As seen best in fig. 3, the frame bars 3a,b and 4a,b are mainly U-shaped with a body 10 and two opposite legs 11 extending from the body. The locking grooves are made in legs of the frame bars with a bottom 12 and two opposite sides 13. In this case three longitudinal barbs 16 are furthermore made on both these sides.

Each locking list is designed as a U with a body 14 and two opposite legs 15 with three longitudinal barbs 17 on the exterior.

The body 14 and the two opposite legs 15 of the locking list pass, as shown, into each other without curvature. The body 14 can thus press over the entire area of the sheet 9a,b that is freely spanning the locking groove 5a,b, whereby the sheet can be fastened controllably in the locking groove.

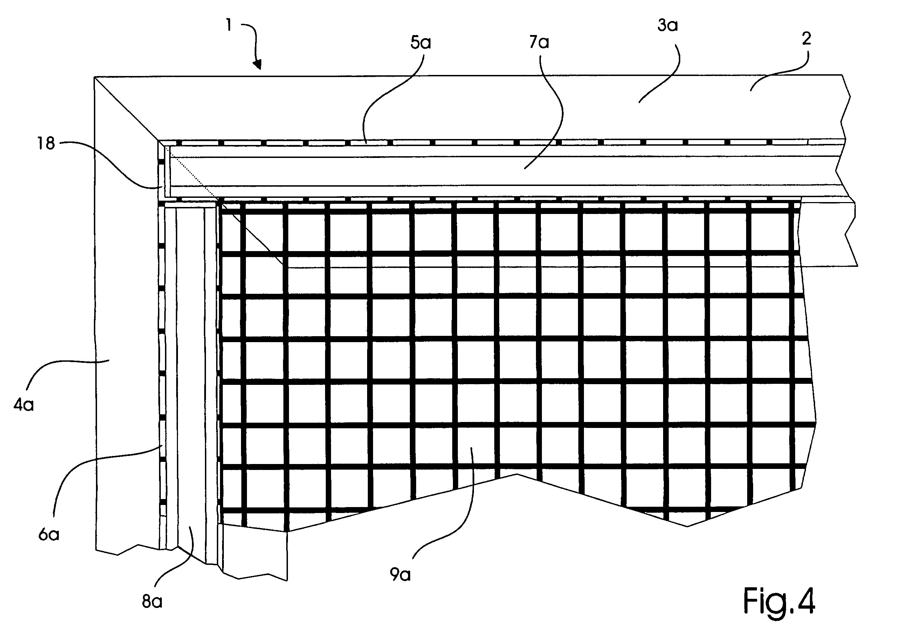

Fig. 4 is a fractional plan view of a corner of the thermoelement in mounted state. The frame bars 3a and 4a are, seen in cross section, congruent and meet in the corner at an angle of 45°. As seen, the locking grooves 5a and 6a of the frame bars will thereby pass into each other via a joint locking groove area 18.

The thermoelement according to the invention is made in the following way.

Each frame bar 3a,b and 4a,b is cut in desired lengths of an extruded aluminium profile and either simultaneously or subsequently bevelled 45°. Then, the bars are assembled, as shown in fig. 4, to a rectangular frame 2. In the corners, the bars are riveted to each other by means of an angle piece located internally (not shown). The assembling can however also take place in any other expedient way.

Each sheet 9a,b are cut in dimension possibly with overlap, that is a little too big. In fig. 3 is seen that the sheet 9b is placed on the right side of the frame, and that it is extending a distance past the locking groove 5b. The locking list 7b is pushed in the direction indicated by the arrow into the locking groove 5b, whereby the sheet is fastened between the locking groove and the locking list.

This situation is shown in the left side of fig. 3. As seen, the barbs 16 of the locking groove and the barbs 17 of the locking list are facing in opposite directions with the barbs 16 and 17 designed in such a way that the barbs 16 prevent the sheet from being pulled out of the locking groove, and the barbs 17 prevent the locking list from being pulled out of the fixed sheet.

In the case shown, the barbs 16 are expediently located in the spaces between the barbs 17 in the mounted state of the sheet. The distance between the locking list and the locking groove is furthermore chosen in such a way that it corresponds to or is slightly smaller than the thickness of the sheet to thereby ensure that the sheet is effectively retained by the frame. When the sheet is mounted, as shown in the left side of fig. 3, its opposite side is held across the opposite locking groove 5b by a hold in the overlap of the sheet whereas the associate locking list 7b is pushed into the locking groove 5b in the same way, as shown in the right side of fig. 3. Thereby, a peripheral area of the sheet is pulled into the locking groove 5b whereby the sheet is mounted tightly between the two locking grooves 5a and 5b.

Then the sheet is mounted between the two other locking grooves 4a and 4b in a corresponding way.

After mounting of one of the sheets in this way on one side of the frame, this frame is turned over, after which the second sheet is placed on the other side of the frame and the above operations are repeated.

Finally possible excess material is clipped or cut off the sheets.

As shown in fig. 4, the locking lists 7a and 8a meet in the joint locking groove area 18. Here the locking lists can be bevelled 45° but in the case shown, the locking lists 7a and 8a are advantageously cut straight off, that is at an angle of 90°. The locking list 7a then fills the joint locking groove area 18 whereas the locking list 8a abuts on the area.

To drain possible condensation water the thermoelement can be designed with one or several small holes on the underside, seen in the erected state of the thermoelement.

As seen, the thermoelement is inexpensive to manufacture and mounted quickly and easily. When the sheet is made of a strong material, such as e.g. glass fibre reinforced plastic, the tightly mounted sheet will furthermore be sufficient in some cases to hold the frame together without use of the above angle pieces in the corners of the frame.

The invention is shown in the drawing and described above on the basis of a rectangular shape of the thermoelement with a locking groove and associate locking lists on either side.

Within the scope of the invention the thermoelement can however have any other configuration, for example be triangular or hexagonal.

Instead of two locking grooves with associate locking lists there can furthermore be only one locking groove for fastening peripheral areas on both sheets, the peripheral area of one sheet then overlapping the peripheral area of the other sheet in the locking groove.

Said one locking groove can be made on one side of the frame. In this case the sheet on the other side of the frame is extending round to the locking groove via the peripheral exterior of the frame.

In another case said one locking groove can be made on the peripheral exterior of the frame.

Furthermore, the sheet can be transparent to greater or lesser extent or alternatively be nontransparent depending on for which purpose the thermoelement is to be used.

Furthermore, the material need not be glass fibre reinforced plastic but can for example be non-reinforced plastic, fabric, canvas or leather.

The thermoelement according to the invention is suitable for temporarily closing wall openings in buildings being built or renovated.

It is also suitable for constructing tents or hutments for the refugees from catastrophes or wars. The thermoelements are inexpensive and rugged and quick and easy for constructing. Furthermore, they isolate well and can therefore serve for effectively protecting refugees against wind and weather in cold climates.

The thermoelements can also be used for constructing greenhouses or for temporarily isolating buildings.

The thermoelements are light and at the same time rugged to external mechanical actions. They are therefore easy and convenient for constructing, and they can easily and safely be transported to the place where they are to be used.

When the locking lists are U-shaped, the can be used for mounting the thermoelements in situ or joining them to assembled constructions by means of suitable fittings.

The U-shaped locking lists can also be used for fastening possible sealing lists.

## Claims

1. A thermoelement comprising
- a frame (2) with a flexible sheet (9a,b) on either side for covering the opening defined by the frame (2),
- at least one at least partly circumferential, U-shaped locking groove (5a,b;6a,b) having a bottom (12) and two opposite sides (13) and arranged to receive a peripheral area of the sheets (9a,b), and
- a locking list for each locking groove for fastening the sheet (9a,b) in the at least one locking groove (5a,b;6a,b)
**characterised in**
- **that** each locking list (7a,b;8a,b) is U-shaped with a body (14) facing the bottom (12) of the respective locking groove in mounted state and two opposite legs (15) facing each their side (13) of the sides of the locking groove (5a,b;6a,b) at the same time.

2. A thermoelement according to claim 1, **characterised in that** the distance between a side (13) of the locking groove (5a,b;6a,b) and the opposite leg (15) of an associate locking list (7a,b;8a,b) corresponds to or is smaller than the thickness of a fastened sheet (9a,b).

3. A thermoelement according to claim 1 or 2, **characterised in that** at least one longitudinal rib (16) is made on at least one of the sides (13) of a locking groove (5a, b; 6, a, b).

4. A thermoelement according to claim 1, 2 or 3, **characterised in that** at least one longitudinal rib (17) is made on at least one of the legs (15) of a locking list (7a,b;8a,b).

5. A thermoelement according to claim 1, 2 or 3, **characterised in that** the body (14) and two opposite legs (15) of the U-shaped locking lists pass into each other with no or small curvarure.

6. A thermoelement according to any of the claims 1 - 5, **characterised in that** the frame (2) is made with a peripheral exterior (10) and two transverse sides (11) extending from the exterior (10) at a mutual distance and defining the opening of the frame (2), and that a locking groove (5a,b;6,a,b) is made in each transverse side (11) for one of the sheets (9a,b).

7. A thermoelement according to any of the claims 1 - 6, **characterised in that** the frame (2) is rectangular and made up of four mainly U-shaped frame bars (3a,b;4a,b) each having a body (10) and two legs (11), that a locking groove (5a,b;6a,b) is made in each of these legs (11) for receiving a peripheral area of one of the sheets (9a,b), and that each locking groove (5a,b;6a,b) has a locking list (7a,b;8a,b) for fastening said peripheral area (9a,b) in the at least one locking groove (5a,b;6a,b).

8. A thermoelement according to any of the claims 1 - 7, **characterised in that** the U-shaped frame bars (3a,b;4a,b) paired abut on each other in the corner of the frame (2) with end faces forming an angle of 45° with the respective frame bar, and that the locking grooves (5a,b;6a,b) on the two frame bars (7a,b;8a,b) pass into each other via a joint locking groove area (18).

9. A thermoelement according to claim 8, **characterised in that** a corner of a sheet (9a,b) is fastened in the joint locking groove area (18) in one of the corners of the frame (2) by an end part on the locking list (7a,b;8a,b) of one of the frame bars (3a,b;4a,b), whereas the end of the locking list (7a,b;8a,b) of the other frame bar (7a,b;8a,b) is abutting on the joint locking groove area (18).

10. A method for mounting the sheets of claims 1 - 9 on the associate frame (2)
**characterised in**
- **that** the frame (2) is assembled by a number of frame bars (3a,b;4a,b),
- **that** the sheets (9a,b) is placed on either side of the assembled frame (2), and
- **that** a peripheral area of each sheet (9a,b) is fastened between a locking groove (5a,b;6a,b) and a locking list (7a,b;8a,b).

## Patentansprüche

1. Ein Thermoelement mit
- einem Rahmen (2) mit einem flexiblen Blatt (9a,b) auf jeder Seite zum Abdecken der von dem Rahmen (2) definierten Öffnung,
- wenigstens einer wenigstens teilweise umlaufenden, U-förmigen Verriegelungskerbe (5a,b;6a,b) mit einem Boden (12) und zwei gegenüberliegenden Seiten (13), die zum Aufnehmen eines Randbereichs der Blätter (9a,b) angeordnet sind, und
- einer Verriegelungsleiste für jede Verriegelungskerbe zum Befestigen des Blattes (9a,b) in der wenigstens einen Verriegelungskerbe (5a,b;6a,b),
**dadurch gekennzeichnet, dass**
- jede Verriegelungsleiste (7a,b;8a,b) U-förmig mit einem Körper (14), der in montiertem Zustand zu dem Boden (12) der jeweiligen Verriegelungskörper weist, ist, und mit zwei einander gegenüberliegenden Schenkeln (15), deren Seite jeweils gleichzeitig zu der zugehörigen Seite (13) der Verriegelungskerbe (5a,b;6a,b) weisen.

2. Ein Thermoelement nach Anspruch 1, **dadurch gekennzeichnet, dass** der Abstand zwischen einer Seite (13) der Verriegelungskerbe (5a,b;6a,b) und den gegenüberliegenden Schenkeln (15) einer zugehörigen Verriegelungsleiste (7a,b;8a,b) der Dicke des befestigten Blatts (9a,b) entspricht oder kleiner als diese ist.

3. Ein Thermoelement nach Anspruch 1 oder 2, **dadurch gekennzeichnet, dass** wenigstens eine Längsrippe (16) auf wenigstens einer der Seiten (13) einer Verriegelungskerbe (5a,b:6a,b) vorgesehen ist.

4. Ein Thermoelement nach Anspruch 1, 2 oder 3, **dadurch gekennzeichnet, dass** wenigstens eine Längsrippe (17) an wenigstens einem der Schenkel (15) einer Verriegelungsleiste (7a,b;8a,b) ausgebildet ist.

5. Ein Thermoelement nach Anspruch 1, 2 oder 3, **dadurch gekennzeichnet, dass** der Körper (14) und zwei gegenüberliegende Schenkel (15) der U-förmigen Verriegelungsleiste ineinander ohne oder mit einer kleinen Biegung passen.

6. Ein Thermoelement nach einem der Ansprüche 1 - 5, **dadurch gekennzeichnet, dass** der Rahmen (2) mit einem Außenrand (10) und zwei Querseiten (11), die sich von dem Außenrand (10) mit einem gegenseitigem Abstand erstrecken und die Öffnung des Rahmens (2) definieren, versehen ist, und dass eine Verriegelungskerbe (5a,b;6a,b) in jeder Querseite (11) für eines der Blätter (9a,b) gebildet ist.

7. Ein Thermoelement nach einem der Ansprüche 1-6, **dadurch gekennzeichnet, dass** der Rahmen (2) rechteckig ist und aus vier im wesentlichen U-förmigen Rahmenstangen (3a,b;4a,b) gebildet ist, die jeweils einen Körper (10) und zwei Schenkeln (11) haben, dass eine Verriegelungskerbe (5a,b;6a,b) in jedem dieser Schenkel (11) zum Aufnehmen eines Randbereichs der Blätter (9a,b) ausgebildet ist, und dass jede der Verriegelungskerben (5a,b;6a,b) eine Verriegelungsleiste (7a,b;8a,b) zum Befestigen des Randbereichs (9a,b) in der wenigstens einen Verriegelungskerbe (5a,b;6a,b) hat.

8. Ein Thermoelement nach einem der Ansprüche 1-7, **dadurch gekennzeichnet, dass** die U-förmigen Rahmenstangen (3a,b;4a,b) paarweise in den Ecken des Rahmens (2) aneinander anstoßen, wobei die Endflächen einen Winkel von 45° zu der jeweiligen Rahmenstange bilden, und dass die Verriegelungskerben (5a,b;6a,b) auf den vier Rahmenstangen (7a,b;8a,b) über einen verbindenden Verriegelungskerbenbereich (18) ineinander passen.

9. Ein Thermoelement nach Anspruch 8, **dadurch gekennzeichnet, dass** eine Ecke eines Blattes (9a,b) in dem Verriegelungskerbenbereich (18) in einer der Ecken des Rahmens durch ein Endteil auf der Verriegelungsleiste (7a,b;8a,b) einer der Rahmenstangen (3a,b;4a,b) befestigt ist, während das Ende der Verriegelungsleiste (7a,b;8a,b) der anderen Rahmenstange (7a,b;8a,b) an den Verbindungsverriegelungskerbenbereich (18) anstößt.

10. Verfahren zum Befestigen der Blätter nach den Ansprüchen 1-9 auf dem zugehörigen Rahmen (2)
**dadurch gekennzeichnet,**
- **dass** der Rahmen (2) aus einer Anzahl von Rahmenstangen (3a,b;4a,b) zusammengesetzt ist,
- **dass** die Blätter (9a,b) auf jeder der Seiten des zusammengesetzten Rahmens (2) angeordnet sind, und
- **dass** ein Randbereich jedes Blatts (9a,b) zwischen einer Verriegelungskerbe (5a,b;6a,b) und einer Verriegelungsleiste (7a,b;8a,b) befestigt ist.

## Revendications

1. Thermoélément comprenant
- un cadre (2) avec une feuille flexible (9a, b) de chaque côté pour couvrir l'ouverture définie par le cadre (2),
- au moins une rainure de verrouillage en forme de U, au moins partiellement circonférentielle (5a, b ; 6a, b) comportant un fond (12) et deux côtés opposés (13), et agencée pour recevoir une zone périphérique des feuilles (9a, b), et
- une liste de verrouillage pour chaque rainure de verrouillage pour fixer la feuille (9a, b) dans la au moins une rainure de verrouillage (5a, b ; 6a, b)
**caractérisé en ce que**
- chaque liste de verrouillage (7a, b ; 8a, b) est en forme de U avec un corps (14) en face du fond (12) de la rainure de verrouillage respective dans un état monté et deux pattes opposées (15), chacune en face de leur côté (13) des côtés de la rainure de verrouillage (5a, b ; 6a, b) en même temps.

2. Thermoélément selon la revendication 1, **caractérisé en ce que** la distance entre un côté (13) de la rainure de verrouillage (5a, b ; 6a, b) et la patte opposée (15) d'une liste de verrouillage (7a, b ; 8a, b) associée correspond à, ou est plus petite que, l'épaisseur d'une feuille fixée (9a, b).

3. Thermoélément selon la revendication 1 ou 2, **caractérisé en ce qu'**au moins une nervure longitudinale (16) est pratiquée sur au moins l'un des côtés (13) d'une rainure de verrouillage (5a, b ; 6a, b).

4. Thermoélément selon la revendication 1, 2 ou 3, **caractérisé en ce qu'**au moins une nervure longitudinale (17) est pratiquée sur au moins l'une des pattes (15) d'une liste de verrouillage (7a, b ; 8a, b).

5. Thermoélément selon la revendication 1, 2 ou 3, **caractérisé en ce que** le corps (14) et deux pattes opposées (15) des listes de verrouillage en forme de U passent les uns dans les autres avec peu ou pas de courbure.

6. Thermoélément selon l'une quelconque des revendications 1 à 5, **caractérisé en ce que** le cadre (2) est pratiqué avec un extérieur périphérique (10) et deux côtés transversaux (11) s'étendant depuis l'extérieur (10) à une distance mutuelle et définissant l'ouverture du cadre (2), et **en ce qu'**une rainure de verrouillage (5a, b ; 6a, b) est pratiquée dans chaque côté transversal (11) pour l'une des feuilles (9a, b).

7. Thermoélément selon l'une quelconque des revendications 1 à 6, **caractérisé en ce que** le cadre (2) est rectangulaire et constitué de quatre barres de cadre principalement en forme de U (3a, b ; 4a, b) ayant chacune un corps (10) et deux pattes (11), **en ce qu'**une rainure de verrouillage (5a, b ; 6a, b) est pratiquée dans chacune de ces pattes (11) pour recevoir une zone périphérique de l'une des feuilles (9a, b), et **en ce que** chaque rainure de verrouillage (5a, b ; 6a, b) comporte une liste de verrouillage (7a, b ; 8a, b) pour fixer ladite zone périphérique (9a, b) dans la au moins une rainure de verrouillage (5a, b ; 6a, b).

8. Thermoélément selon l'une quelconque des revendications 1 à 7, **caractérisé en ce que** les barres de cadre en forme de U (3a, b ; 4a, b) appariées viennent en butée les unes contre les autres dans le coin du cadre (2) avec des faces d'extrémité formant un angle de 45° avec la barre de cadre respective, et **en ce que** les rainures de verrouillage (5a, b ; 6a, b) sur les deux barres de cadre (7a, b ; 8a, b) passent les unes dans les autres via une zone de rainure de verrouillage jointe (18).

9. Thermoélément selon la revendication 8, **caractérisé en ce qu'**un coin d'une feuille (9a, b) est fixé dans la zone de rainure de verrouillage jointe (18) dans l'un des coins du cadre (2) par une partie d'extrémité sur la liste de verrouillage (7a, b ; 8a, b) de l'une des barres de cadre (3a, b ; 4a, b), tandis que l'extrémité de la liste de verrouillage (7a, b ; 8a, b) de l'autre barre de cadre (7a, b ; 8a, b) vient en butée sur la zone de rainure de verrouillage jointe (18).

10. Procédé pour monter les feuilles des revendications 1 à 9 sur le cadre (2) associé
**caractérisé en ce que**
- le cadre (2) est assemblé par un certain nombre de barres de cadre (3a, b ; 4a, b)
- les feuilles (9a, b) sont placées de chaque côté du cadre assemblé (2), et
- une zone périphérique de chaque feuille (9a, b) est fixée entre une rainure de verrouillage (5a, b ; 6a, b) et une liste de verrouillage (7a, b ; 8a, b).
